# FASCICULE DE BREVET EUROPEEN

(11) **EP 2 329 908 B1**
(45) Date de publication et mention de la délivrance du brevet: **15.04.2015**
(21) Numéro de dépôt: 10360042.5
(22) Date de dépôt: 09.11.2010
(51) Int. Cl.: B23K 26/03, B23K 26/20, B23K 26/38, B23K 26/14, B23K 26/04

(54) **Dispositif universel à laser pour l'usinage et/ou l'assemblage de pièces**
Universelle Laservorrichtung für die Bearbeitung und/oder Verarbeitung und/oder Zusammensetzung von Werkstücken
Universal laser device for machining and/or assembling parts

(30) Priorité: 10.11.2009 FR 0957918
(43) Date de publication de la demande: 08.06.2011
(73) Titulaire: Vogel, Philippe, 68720 Flaxlanden (FR)
(72) Inventeur: Vogel, Philippe, 68720 Flaxlanden (FR)
(74) Mandataire: Nithardt, Roland

(56) Documents cités:
- JP-A- 3 254 165
- JP-A- 10 006 062
- JP-A- 11 077 356
- JP-A- 59 141 391
- US-A- 5 298 716
- US-A- 5 728 993
- US-A1- 2005 263 505
- US-B1- 6 175 096
- US-B1- 6 822 187

## Description

La présente invention concerne un dispositif universel à laser pour l'usinage et/ou l'assemblage de pièces conformément au préambule de la revendication 1 (voir, par exemple, US 6 822 187 B).

### Technique antérieure :

Les dispositifs à laser sont largement répandus dans diverses industries, notamment dans l'industrie automobile, pionnière dans ce domaine, pour réaliser de multiples opérations d'usinage et/ou d'assemblage comme le soudage, le soudobrasage, la trempe, la refusion superficielle, le décapage, la découpe, le perçage, etc. sur tout type de pièces principalement métalliques, de toute épaisseur.

Ces dispositifs à laser sont généralement déplacés par rapport aux pièces à usiner et/ou à assembler. Dans ce cas, ils sont montés à l'extrémité d'un manipulateur robotisé ou cartésien pour exécuter lesdites opérations d'usinage et/ou d'assemblage de manière automatique. Un programme informatique commande le déplacement du manipulateur dans les trois directions en fonction d'une trajectoire donnée. De manière traditionnelle, chaque dispositif à laser est conçu spécifiquement pour une seule application, par exemple pour la soudure, la découpe ou le décapage, étant donné que chaque application nécessite une morphologie de la répartition d'énergie propre (puissance, taille et forme du faisceau laser). Des exemples sont donnés par exemple dans les publications US 6,822,187 et US 5,298,716. Par conséquent, lorsque l'on souhaite changer d'application, il est indispensable de changer de dispositif à laser. Cette obligation génère immanquablement des contraintes liées au coût d'investissement pour l'achat de plusieurs dispositifs à laser afin de pouvoir répondre aux différents besoins d'un même utilisateur, au stockage de ces dispositifs à laser, à leur gestion, à leur manipulation, à leur entretien, etc. La publication JP 03254165 propose un début de solution dans laquelle le module optique est fixé de manière démontable sur la tête laser par des vis de fixation qui nécessitent un temps d'intervention relativement long pour changer de module et le recours à un outillage spécifique, ce qui n'est pas une solution optimale.

Ces dispositifs à laser sont traditionnellement associés à des systèmes de contrôle optique visant à corriger les paramètres de fonctionnement, tels que la trajectoire du faisceau laser, la qualité du cordon de soudure, etc. Néanmoins, ces systèmes de contrôle sont complexes, généralement déportés, et leur conception ne leur permet pas de réaliser une correction en temps réel, comme par exemple dans les publications JP 11077356 et JP 59141391. La trajectoire du faisceau ne peut être modifiée qu'en agissant sur les actionneurs du manipulateur robotisé ou cartésien, et non directement sur le dispositif à laser. Les données optiques sont traitées par des unités informatiques déportées sous Windows® ou similaire, qui par leur architecture électronique, leur carte de traitement, etc. sont dotées d'une inertie de traitement, d'où une réponse qui ne peut pas être immédiate. De ce fait, le résultat qualitatif des opérations d'usinage et/ou d'assemblage n'est pas optimal, voire limité.

### Exposé de l'invention:

La présente invention apporte une solution aux problèmes évoqués ci-dessus en proposant un dispositif à laser, universel, pouvant s'adapter facilement à différentes applications, de manière simple et rapide, nécessitant un minimum d'investissement, de gestion, de manipulation et d'entretien, ce dispositif à laser pouvant être associé à des moyens de contrôle optique très performants et peu encombrants permettant une correction des paramètres de fonctionnement en vrai temps réel.

Dans ce but, l'invention concerne un dispositif à laser tel que défini dans la revendication 1.

Le fait d'avoir plusieurs modules optiques dédiés qui se combinent à des modules de base permet de changer la morphologie de la répartition d'énergie du faisceau laser liée à l'application souhaitée avec un même outil. Ainsi le dispositif à laser selon l'invention est universel et adaptable aux besoins de l'utilisateur. Dans ce cas, chaque module optique est dédié à au moins une application et comporte lesdits moyens de fixation complémentaires et lesdits moyens d'obturation pour être interchangeables et assemblables audit module optique de base.

Les moyens de fixation complémentaires peuvent comporter un système de fixation du type à baïonnette permettant d'assembler les modules optiques par un mouvement relatif poussé-tourné d'un module par rapport à l'autre module ne nécessitant ainsi aucun outillage. Ils comportent avantageusement des moyens de verrouillage agencés pour empêcher le démontage desdits modules optiques assemblés, et des moyens de déverrouillage agencés pour libérer les moyens de verrouillage et autoriser le démontage des modules optiques.

Les moyens d'obturation respectivement du module optique de base et du module optique dédié sont, conformément à la présente invention, agencés pour coopérer avec les moyens de fixation complémentaires pour être déplacés automatiquement entre une position fermée et une position ouverte, et inversement, respectivement lorsque les modules optiques sont assemblés et désassemblés, garantissant ainsi une protection efficace des optiques.

Dans une forme de réalisation préférée, les moyens d'obturation comportent un volet d'obturation en forme de diaphragme circulaire monté dans un anneau de support et commandé par un ergot et les ergots de commande des volets d'obturation correspondants aux modules optiques assemblés sont couplés entre eux.

Les modules optiques peuvent comporter respectivement une ouverture agencée pour recevoir les ergots de commande des volets d'obturation et s'étendant sur un secteur angulaire correspondant au moins à la course desdits ergots de commande entre les positions fermée et ouverte des volets d'obturation.

L'optique de collimation du module optique de base peut être montée sur un support mobile axialement agencé pour modifier la distance entre le connecteur et l'optique de collimation pour augmenter ou réduire le diamètre et la densité d'énergie du faisceau laser.

Le module optique de base peut comporter un premier module de renvoi d'angle pourvu au moins d'un miroir incliné disposé en aval de ladite optique de collimation agencé pour dévier ledit faisceau laser. Il peut aussi comporter un second module de renvoi d'angle pourvu au moins d'un miroir incliné et d'une optique de focalisation pour créer un deuxième faisceau laser à partir d'une même source de lumière. Il peut enfin comporter un second module optique de base fixé au premier module optique de base et comportant au moins un connecteur à une source de lumière et une optique de collimation pour créer un deuxième faisceau laser à partir d'une deuxième source de lumière.

Le module optique de base peut avantageusement comporter au moins une optique diffractive disposée en aval de l'optique de collimation et agencée pour créer, à partir d'au moins un faisceau laser, une ou plusieurs zones d'impact, de formes identiques ou différentes.

Le dispositif à laser peut comporter un module de focalisation mobile pourvu au moins d'une optique de focalisation couplée à un actionneur agencé pour déplacer latéralement ladite optique de focalisation par rapport à l'axe du faisceau laser et déplacer son point d'impact.

Dans une forme de réalisation préférée, le dispositif à laser comporte au moins un premier chariot mobile portant lesdits modules optiques et couplé à un actionneur pour déplacer la zone d'impact en translation selon au moins un premier axe. De préférence, il comporte un second chariot mobile porté par le premier chariot mobile et couplé à un second actionneur pour déplacer la zone d'impact selon au moins un second axe perpendiculaire au premier axe.

Il peut également comporter au moins une liaison pivot entre au moins ledit connecteur et ladite optique de collimation agencée pour former un dispositif à laser orbital. Il peut aussi comporter au moins un premier moteur agencé pour déplacer angulairement ledit dispositif ou ledit module optique dédié pour créer un mouvement pendulaire, ou encore au moins un second moteur agencé pour déplacer axialement ledit dispositif ou un système additionnel de type MIG/MAG pour créer un mouvement linéaire.

De préférence, il comporte des moyens de contrôle agencés pour contrôler la position et la qualité de ladite zone d'impact dudit faisceau laser par rapport à une trajectoire définie sur la surface de travail et des moyens de commande agencés pour commander les actionneurs pour corriger en temps réel la position de la zone d'impact par rapport à la trajectoire, les moyens de contrôle et de commande étant embarqués sur le dispositif.

Ces moyens de contrôle peuvent comporter au moins une caméra embarquée sur ledit dispositif et les moyens de commande peuvent comporter au moins un processeur qui supervise au moins deux circuits logiques dont un est dédié au traitement des images vues par la caméra et l'autre est dédié à la commande des actionneurs des chariots. De manière avantageuse, le processeur est agencé pour fonctionner sur un système d'exploitation de type LINUX®, et les circuits logiques programmables sont de type FPGA. Ces moyens de commande peuvent bien entendu comporter des moyens de communication avec au moins une centrale de contrôle ou un superviseur.

### Description sommaire des dessins :

La présente invention et ses avantages apparaîtront mieux dans la description suivante d'un mode de réalisation donné à titre d'exemple non limitatif, en référence aux dessins annexés, dans lesquels:
   - la figure 1 est une vue en perspective d'un dispositif à laser selon l'invention,
   - la figure 2 est une vue schématique en coupe axiale du dispositif de la figure 1 montrant la modularité entre au moins deux modules optiques de base et deux modules optiques dédiés,
   - la figure 3 est une vue éclatée des moyens de fixation et d'obturation des modules optiques du dispositif de l'invention,
   - la figure 3A est une vue de détail d'un volet à diaphragme des moyens d'obturation de la figure 3,
   - les figures 4A et 4B sont des vues de détail des parties mâle et femelle des moyens de fixation de la figure 3,
   - les figures 5 à 10 illustrent plusieurs variantes du dispositif à laser obtenues par assemblage d'un module optique de base et d'un module optique dédié en fonction des applications considérées,
   - les figures 11 et 12 illustrent deux variantes du dispositif à laser illustrant les moyens de contrôle optique associés et intégrés,
   - la figure 13 illustre schématiquement la carte électronique des moyens de contrôle optique des figures 11 et 12,
   - les figures 14A et 14B illustrent les différentes étapes du traitement d'image obtenu par les moyens de contrôle optique de la figure 13, respectivement pour le contrôle de bain et la profilométrie, et pour le suivi de joint, et
   - la figure 15 montre un exemple de gestion d'un ensemble de dispositifs à laser selon l'invention.

### Illustrations de l'invention et meilleure manière de la réaliser :

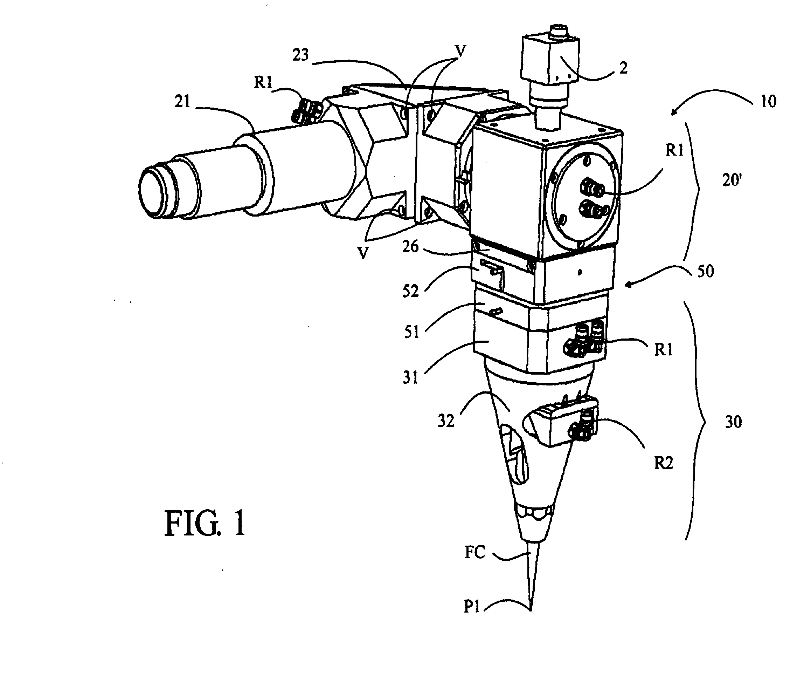

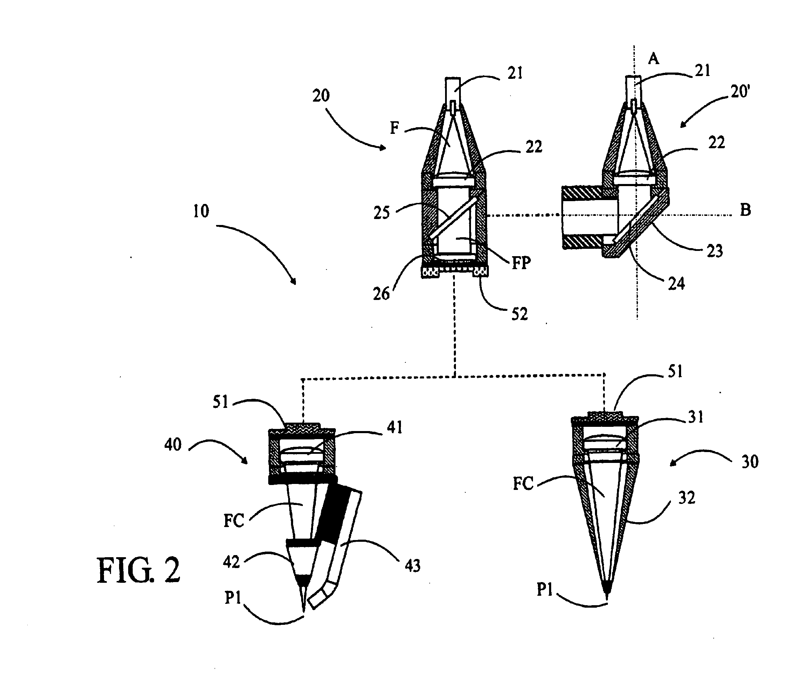

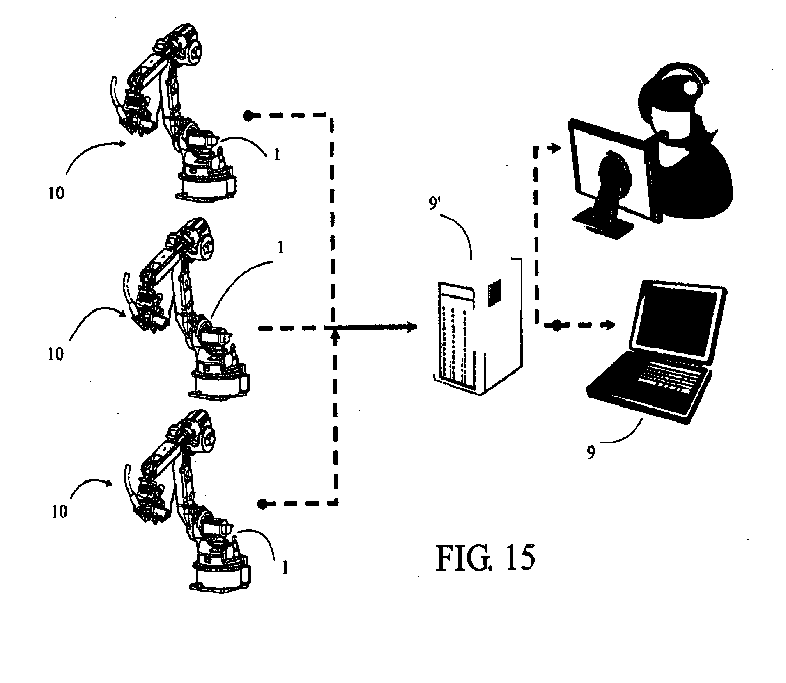

En référence aux figures 1 et 2, le dispositif à laser 10 selon l'invention est universel et s'adapte à tous types d'application d'usinage et/ou d'assemblage de pièces grâce à une conception modulaire permettant de changer rapidement la tête de travail en fonction de la tâche à accomplir. Il comporte au moins un module optique de base 20, 20' destiné à être monté sur une machine, un robot 1 (cf. fig. 15) ou similaire, pour être mobile dans l'espace par rapport aux pièces à usiner et/ou assembler. Dans d'autres cas, les pièces peuvent être mobiles et le dispositif à laser fixe, ou encore les pièces et le dispositif peuvent être mobiles l'un par rapport à l'autre.

Le module optique de base 20, en version alignée, comporte au moins un connecteur 21 à une source de lumière et une optique de collimation 22 (cf. fig. 2) pour créer à partir de la source de lumière F un faisceau laser parallèle FP à l'axe central A du module. Dans l'exemple représenté à la figure 1, le module optique de base 20' est proposé en version coudée et comporte un premier module de renvoi d'angle 23 pourvu au moins d'un premier miroir 24 incliné à 45° par rapport à l'axe central A et disposé en aval de l'optique de collimation 22 pour dévier le faisceau laser en angle droit selon l'axe B perpendiculaire à l'axe A. Bien entendu, l'inclinaison du miroir 24 peut être différente si besoin. Cette version coudée permet de réaliser un dispositif à laser orbital, c'est à dire un outil capable de tourner autour d'un tube par l'extérieur ou par l'intérieur. Dans ce cas, la liaison entre l'optique de collimation 22 et le connecteur 21 est une liaison pivot conçue pour éviter une rupture de la ou des fibre(s) optique(s) constituant la source de lumière F lors des mouvements du dispositif.

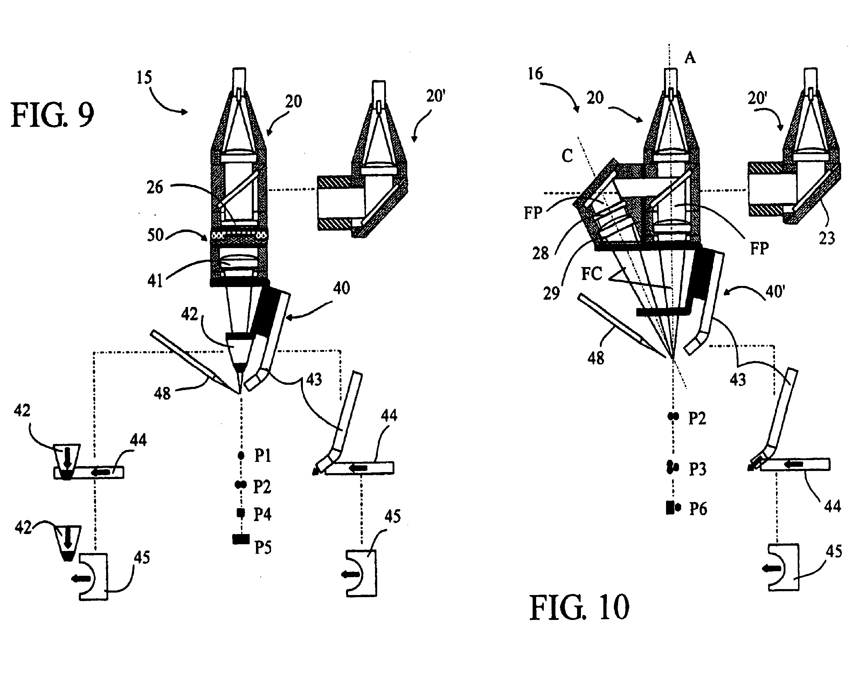

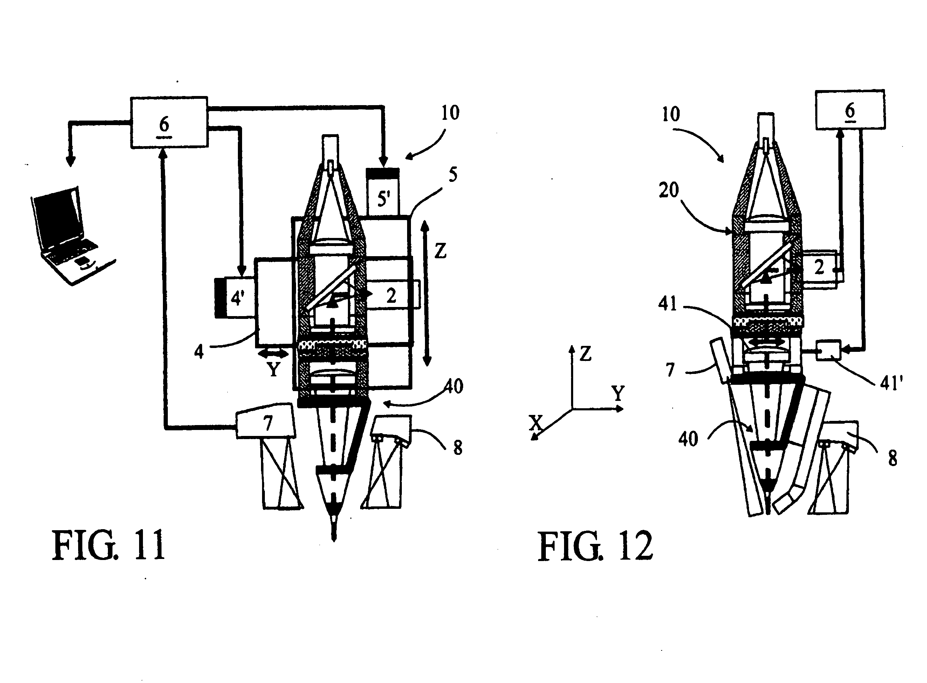

Le module de base 20, 20' comporte en outre une lame séparatrice 25 en verre puis une optique diffractive 26 disposées en aval de l'optique de collimation 22 pour créer à partir du faisceau laser parallèle une ou plusieurs zones d'impact sur une surface de travail, ces zones d'impact pouvant avoir des formes différentes P1, P2, P4, P5 (cf. fig. 9). La lame séparatrice 25 permet de faire du contrôle de bain par une caméra 2 visualisant le bain à travers les optiques (cf. fig.11 et 12), de séparer le faisceau laser en deux faisceaux laser de même puissance ou de puissances différentes, et/ou de visualiser la position du dispositif à laser 10 selon un plan de joint en mode manuel ou en mode automatique (cf. fig. 12).

L'optique diffractive 26 est optionnelle et montée dans une cassette amovible assemblée au module optique de base 20, 20' à la manière d'un tiroir ou de tout autre moyen équivalent permettant de l'insérer, de la retirer ou de la changer selon les besoins. Plusieurs optiques diffractives 26 différentes peuvent être prévues, chacune définissant au moins une forme spécifique de la zone d'impact. Les optiques diffractives 26 ont l'avantage de combiner plusieurs fonctions : elles améliorent la répartition de l'énergie du faisceau laser, corrigent les défauts optiques et permettent de modifier la forme de la zone d'impact. Elles ont une constitution et sont réalisées dans un matériau (quartz et équivalents) tels qu'elles sont capables de résister au flux thermique du faisceau laser. Ces optiques diffractives 26 sont des lentilles à multi-niveau, par exemple jusqu'à seize niveaux de gravures formant un réseau diffractif, associés à une ou deux couches de traitement sous vide. Toute autre composition ou constitution équivalente est possible.

Dans une variante non représentée, le module optique de base 20, 20' peut comporter un support mobile axialement selon l'axe A et portant l'optique de collimation 22 pour modifier la distance entre le connecteur 21 et l'optique de collimation 22 afin d'augmenter ou de réduire le diamètre et la densité d'énergie du faisceau laser parallèle FP.

Dans la variante de réalisation illustrée à la figure 10, le module optique de base 20, 20' comporte un deuxième module de renvoi d'angle 27 pourvu au moins d'un deuxième miroir 28 incliné d'un angle différent de 45° pour créer un deuxième faisceau laser parallèle FP à partir d'une même source de lumière, ce deuxième faisceau étant parallèle à un axe C sécant à l'axe A de sorte à créer deux zones d'impact adjacentes P2, P3 ou P6 sur une surface de travail. A cet effet, ce deuxième module de renvoi d'angle 27 comporte une optique de focalisation 29 permettant de concentrer le deuxième faisceau laser FC en une zone d'impact.

Les parties constitutives du module optique de base 20, 20' sont formées de sous-ensembles assemblés et fixés par des organes de fixation tels que des vis V, boulons, ou similaires, pour être démontables afin de composer le module optique de base 20, 20' dans la version souhaitée, selon les besoins. De préférence, ces organes de fixation sont identiques afin d'utiliser un seul et même outil pour monter et démonter l'ensemble du dispositif à laser 10.

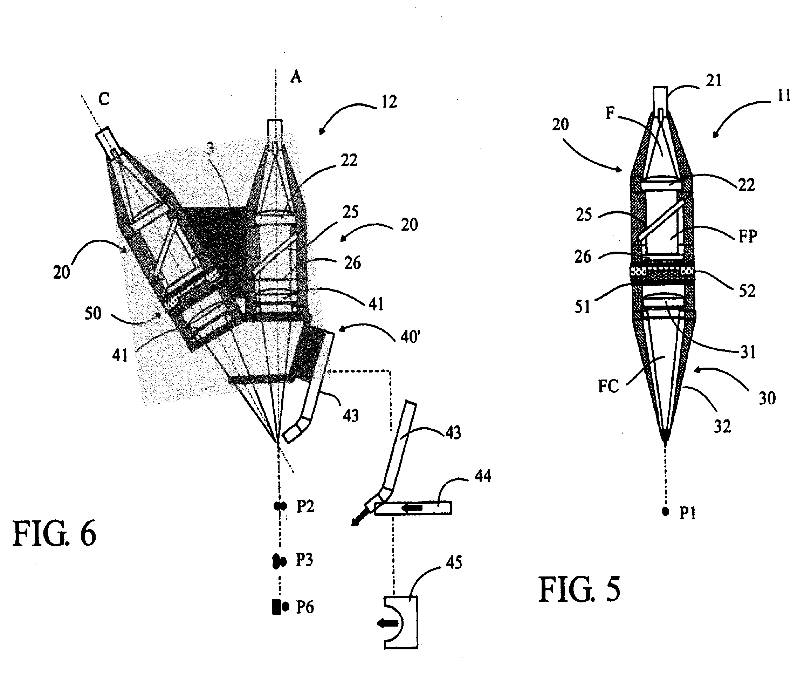

Le module optique de base 20, 20' est complété selon l'invention par différents modules optiques dédiés 30, 40, 40' interchangeables et adaptés pour différents types d'applications. La figure 2 illustre deux modules optiques dédiés, l'un appelé tête de découpe 30 et l'autre appelé tête de soudage 40, 40'. La tête de découpe 30 comporte une optique de focalisation 31 pour concentrer le faisceau laser parallèle FP issu du module optique de base 20, 20' en au moins une zone d'impact P1 sur une surface de travail et un embout de travail 32 agencé pour guider le faisceau laser concentré FC et délimiter ladite zone d'impact P1 (cf. fig. 1 et 5). Cet embout de travail 32 est formé d'un cône et comporte un raccord R2 connecté à une source de gaz de découpe sous haute pression (cf. fig. 1). La tête de soudage 40 comporte une optique de focalisation 41 pour concentrer le faisceau laser parallèle FP issu du module optique de base 20, 20' en au moins une zone d'impact P1 sur une surface de travail et un embout de travail 42 agencé pour guider le faisceau laser concentré FC et délimiter ladite zone d'impact P1 (cf. fig. 6-10). Cet embout de travail 42 est formé d'un cône ouvert latéralement et peut comporter une buse latérale 43 connectée à une source de gaz notamment pour protéger la soudure de l'oxydation. D'autres accessoires peuvent être ajoutés en fonction des applications comme expliqué plus loin. La tête de soudage 40' peut être double comme sur la figure 6 et adaptée pour concentrer deux faisceaux laser croisés.

Les différentes optiques de collimation 22 et/ou de focalisation 29, 31, 41 peuvent être constituées d'une ou de plusieurs lentilles de collimation et/ou de focalisation superposées, ou d'un miroir de collimation et/ou de focalisation. L'utilisation d'un miroir de collimation et/ou de focalisation permet simultanément le renvoi du faisceau laser dans une autre direction et supprime le recours à un module de renvoi d'angle 23, 27. Les différentes optiques peuvent avantageusement subir un traitement optique sous vide spécifique qui leur permet d'être adaptées à différentes sources de lumière, telles que les lasers à fibre ou à disque, les lampes, les diodes, etc.

Le dispositif à laser 10 de la figure 1 est complété, de manière connue, par des raccords R1 à un circuit de refroidissement à eau, des raccords R2 à une source de gaz sous pression, ou tout autre type de raccords selon les besoins. Il comporte également une caméra 2 embarquée, utilisée pour contrôler les opérations d'usinage et/ou d'assemblage en vrai temps réel comme expliqué plus loin. La caméra 2 est avantageusement utilisée pour le réglage manuel du dispositif à laser 10 (focale, position, etc.) au démarrage d'une nouvelle opération d'usinage et/ou d'assemblage.

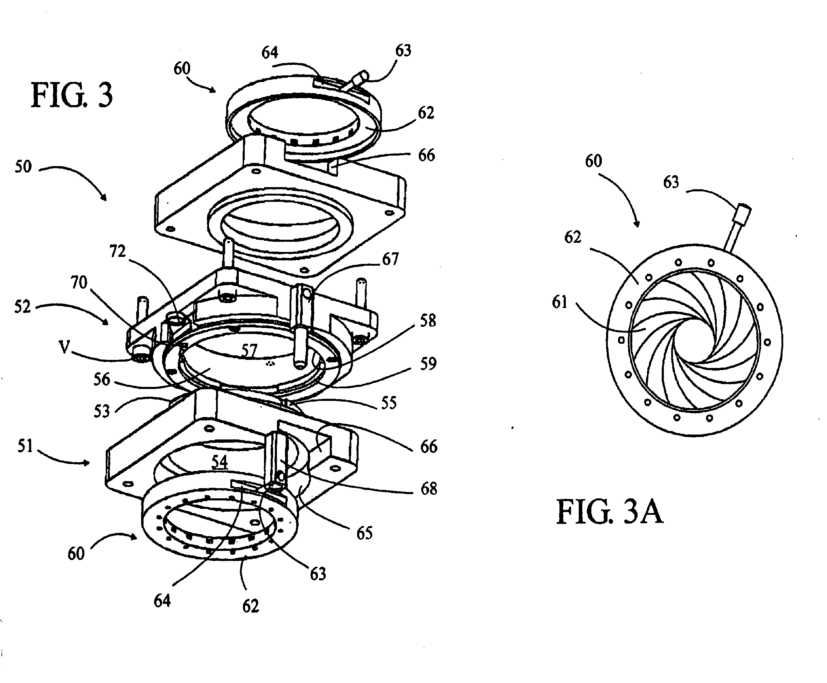

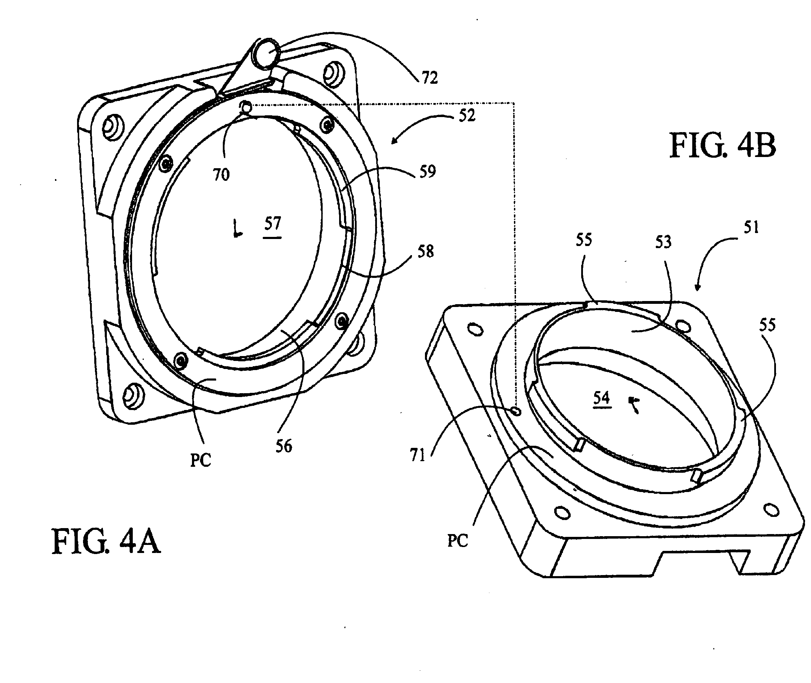

Le module optique de base 20, 20' et les modules optiques dédiés 30, 40, 40' comportent selon l'invention des moyens de fixation complémentaires 50 et des moyens d'obturation 60 agencés pour protéger lesdits modules optiques 20, 30, 40 lorsqu'ils ne sont pas assemblés. En référence plus particulièrement aux figures 3, 4A et 4B, les moyens de fixation complémentaires 50 comportent un système de fixation du type à baïonnette permettant d'assembler les modules optiques par un mouvement relatif poussé-tourné d'un module par rapport à l'autre module. Ce mode de fixation a l'avantage d'être rapide et de ne nécessiter aucun outillage. Les moyens de fixation complémentaires 50 comportent une partie mâle 51 prévue par exemple sur les modules optiques dédiés 30, 40 et une partie femelle 52 prévue sur le module optique de base 20. Selon les figures 4B et 4A, les parties mâle 51 et femelle 52 sont formées chacune d'une bague apte à se fixer sur le module optique concerné 30, 40 ou 20 par des organes de fixation tels que des vis, la forme extérieure de la bague étant compatible à celle du module et par exemple carrée. Dans l'exemple représenté, la partie mâle 51 (cf. fig. 4B) comporte un fût 53 délimitant une ouverture centrale 54 pour le passage du faisceau laser, le fût comportant sur sa surface extérieure au moins un et dans l'exemple représenté trois crans de verrouillage 55 s'étendant radialement et répartis de manière équidistante ou non. La partie femelle 52 (cf. fig. 4A) comporte un fût 56 délimitant une ouverture centrale 57 de même diamètre que l'ouverture centrale 54 de la partie mâle 51, le fût comportant sur sa surface intérieure au moins un et dans l'exemple représenté trois encoches 58 délimitant trois butées axiales 59. L'assemblage des deux parties 51, 52 s'effectue en positionnant les crans de verrouillage 55 face aux encoches 58, en insérant axialement la partie mâle 51 dans la partie femelle 52 et en tournant l'une partie par rapport à l'autre d'un secteur angulaire déterminé pour amener les crans de verrouillage 55 à l'arrière des butées axiales 59. La position assemblée est verrouillée par un téton 70 assujetti en position sortie par un organe de rappel (non représenté), prévu sur le plan de contact PC de la pièce femelle 52 (cf. fig. 4A) et agencé pour s'emboîter dans un orifice 71 correspondant prévu sur le plan de contact PC correspondant de la pièce mâle 51 (cf. fig. 4B). Le téton 70 et l'orifice 71 forment des moyens de verrouillage empêchant le démontage des modules optiques assemblés. Une gâchette 72 manoeuvrable manuellement, prévue sur la pièce femelle 52 et couplée au téton 70, permet d'escamoter le téton 70 en position rétractée pour pouvoir désassembler les modules optiques. La gâchette 72 forme ainsi des moyens de déverrouillage. L'alignement ou la co-axialité des fûts 53 et 56 des parties mâle 51 et femelle 52 est assurée par un usinage très précis des plans de contact PC combiné le cas échéant avec une rectification ou tout autre procédé équivalent. Bien entendu, toute autre forme de réalisation équivalente des moyens de fixation complémentaires 50 est envisageable l'essentiel étant de réaliser selon l'invention un système de montage/démontage rapide et sans outillage. De même, la construction des moyens de verrouillage empêchant le démontage des modules optiques assemblés peut variée. La gâchette 72 de déverrouillage peut être disposée à un autre endroit et actionnée axialement plutôt que radialement.

Les moyens d'obturation 60 respectivement du module optique de base 20 et des modules optiques dédiés 30, 40 sont agencés pour coopérer avec les moyens de fixation complémentaires 50 afin d'être asservis et déplacés automatiquement entre une position fermée et une position ouverte, et inversement, lorsque les modules optiques sont respectivement assemblés et désassemblés. Dans l'exemple illustré, ces moyens d'obturation 60 comportent un volet d'obturation 61 en forme de diaphragme circulaire monté dans un anneau de support 62 et commandé par un ergot 63 s'étendant radialement à travers une lumière 64. Les anneaux de support 62 sont logés dans un alésage 65 ménagé respectivement dans les parties mâle 51 et femelle 52 des moyens de fixation complémentaires 50 des modules optiques 20, 30, 40. Les ergots de commande 63 des moyens d'obturation 60 s'étendent à l'extérieur desdits modules optiques 20, 30, 40 au travers d'ouvertures radiales 66 ménagées dans les parties mâle 51 et femelle 52 et s'étendant au moins sur un secteur angulaire correspondant à la course des ergots de commande 63 entre les positions fermée et ouverte des volets d'obturation 61. Ces ergots de commande 63 sont couplés entre eux par une pièce de liaison 67 et 68 lorsque les modules optiques sont assemblés de manière à commander le déplacement des volets d'obturation 61 lors de la rotation relative d'un module optique par rapport à l'autre aussi bien lors de l'assemblage que du désassemblage. Une des pièces de liaison 67 est mâle et reçoit l'ergot de commande 63 d'un des volets d'obturation 61 et l'autre pièce de liaison 68 est femelle et reçoit l'ergot de commande 63 de l'autre volet d'obturation 61. Tout autre moyen de commande peut également convenir. Bien entendu, toute autre forme de réalisation équivalente des moyens d'obturation 60 est envisageable l'essentiel étant qu'ils soient asservis automatiquement par les moyens de fixation complémentaires 50 pour supprimer le recours à toute manipulation. Les ergots de commande 63 peuvent notamment être orientés axialement plutôt que radialement pour circuler dans des ouvertures axiales ménagées à l'intérieur des parties mâle 51 et femelle 52, garantissant ainsi l'étanchéité des modules optiques.

Les figures 5 à 10 illustrent différents dispositifs à laser 11 à 16 selon l'invention, qui sont destinés chacun à un type d'opération ou d'application, et sont obtenus par l'assemblage de différents modules optiques et de différents accessoires décrits au fur et à mesure.

La figure 5 illustre un dispositif à laser 11 destiné à des opérations de découpe ou des opérations combinées de découpe et de soudage. Il comporte notamment un module optique de base 20, en version alignée, pourvu d'une lame séparatrice 25 et d'une optique diffractive 26, assemblé à une tête de découpe 30 (cf. fig. 2) pour créer sur la surface de travail une zone d'impact P1 sous la forme d'un point rond unique, appelé communément « spot ». Selon la configuration du robot ou de la machine portant le dispositif à laser 11, le module optique de base 20' peut être proposé en version coudée, et comporter le premier module de renvoi d'angle 23 (cf. fig. 1 et 2).

La figure 6 illustre un dispositif à laser 12 destiné à des opérations de soudage, notamment pour le soudage d'alliages spéciaux, le décapage de tôle ou similaire. Il comporte notamment deux modules optiques de base 20, en version alignée, pourvus d'optiques diffractive 26, assemblés à une tête de soudage double 40' pourvue d'une buse latérale 43. Les deux modules optiques de base 20 sont alimentés par deux sources de lumière distinctes, pouvant avoir des puissances différentes, et assemblés entre eux par une pièce de fixation 3, orientable ou non, de sorte que les deux faisceaux laser produits, identiques ou de puissances différentes, se croisent au-delà de la surface de travail pour créer à la surface de travail deux zones d'impact adjacentes P2, P3 ou P6. Ces zones d'impact peuvent avoir des formes différentes en fonction, soit du type d'optique diffractive 26 utilisée, soit de la forme de la source de lumière utilisée (fibre optique ronde ou carré, par exemple), et notamment deux ronds pour la zone d'impact P2, trois ronds dont deux superposés pour la zone d'impact P3, un carré et un rond pour la zone d'impact P6. Le dispositif à laser 12 peut être complété par un trainard droit 44 ou un trainard circulaire 45 qui, en prolongement de la buse latérale 43, permettent de protéger le cordon de soudure réalisé.

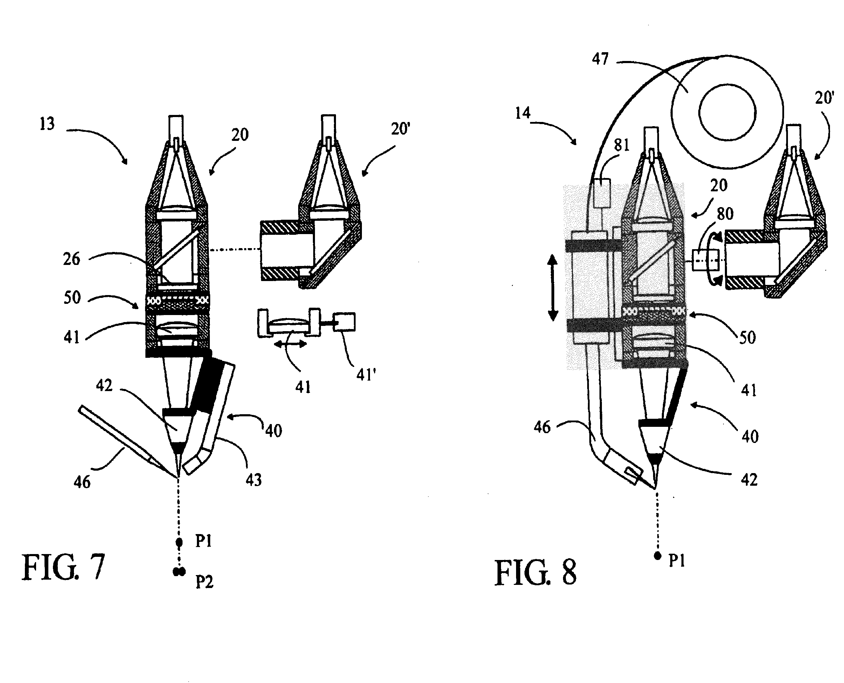

La figure 7 illustre un dispositif à laser 13 destiné à des opérations de soudage de précision ou de micro-soudage. Il comporte notamment un module optique de base 20, 20', en version alignée ou coudée, pourvu d'une optique diffractive 26, et assemblé à une tête de soudage 40 (cf. fig. 2) pour créer sur la surface de travail au moins une zone d'impact P1, P2 et par exemple un rond unique pour la zone d'impact P1 et deux ronds adjacents pour la zone d'impact P2. Il est complété par un système d'alimentation d'un fil d'apport 46. L'optique de focalisation 41 peut être fixe ou mobile et embarquée sur un support 41' assujetti à un actionneur dans le but d'ajuster avec précision la zone d'impact P1, P2.

La figure 8 illustre un dispositif à laser 14 destiné à des opérations de soudage hybride pour des pièces de grande épaisseur. Il comporte notamment un module optique de base 20, 20', en version alignée ou coudée, pourvu d'une optique diffractive 26, et assemblé à une tête de soudage 40 (cf. fig. 2) sans buse latérale, pour créer sur la surface de travail au moins une zone d'impact P1 par exemple en forme de rond unique. Il est complété par un système de soudage type MIG/MAG (Metal Inert Gas / Metal Active Gas) 46 à partir d'un dévidoir de fil d'apport 47. Ce dispositif à laser 14 peut avantageusement être motorisé. Il peut notamment comporter un premier moteur 80 pour créer un mouvement pendulaire permettant de bouger angulairement tout le dispositif à laser 14 ou simplement le module optique dédié dans le but d'augmenter la largeur du dépôt de matière. Ce mode de fonctionnement est utilisé par exemple lors du remplissage d'un joint de soudure. Dans ce cas précis le faisceau laser est défocalisé et est utilisé pour préchauffer la pièce afin d'améliorer le mouillage du bain liquide formé. Il peut également comporter un second moteur 81 pour créer un mouvement vertical permettant de déplacer tout le dispositif à laser ou uniquement le système de soudage type MIG/MAG 46 pour passer d'un mode de soudage (forte pénétration, densité d'énergie élevée) à un mode de remplissage (laser défocalisé) utilisé pour préchauffer la pièce afin d'améliorer le mouillage du bain liquide formé. Ces deux mouvements pendulaire et vertical peuvent être combinés ou non, et utilisés dans le cadre de la soudure orbitale, de la soudure hybride, la soudobrasure, etc.

La figure 9 illustre un dispositif à laser 15 destiné à des opérations de soudage, de soudobrasage, de trempe, de refusion superficielle, ou similaire. Il comporte notamment un module optique de base 20, 20', en version alignée ou coudée, pourvu d'une optique diffractive 26, et assemblé à une tête de soudage 40 (cf. fig. 2) pour créer sur la surface de travail au moins une zone d'impact P1, P2, P4, P5 sous la forme d'un rond unique pour la zone d'impact P1, deux ronds adjacents pour la zone d'impact P2, d'un carré unique pour la zone d'impact P4 et d'un rectangle pour la zone d'impact P5. Il est complété par un système d'alimentation d'un fil d'apport 48. Le dispositif à laser 15 peut être complété par un trainard droit 44 ou un trainard circulaire 45, assemblé à la buse latérale 43, ou assemblé à l'embout de travail 42 coaxial, pour protéger le cordon de soudure réalisé.

La figure 10 illustre un dispositif à laser 16 destiné à des opérations de soudage, notamment pour le soudage d'alliages spéciaux, le décapage de tôle ou similaire, comme le dispositif à laser 12 de la figure 6. Il comporte un module optique de base 20, 20', en version alignée ou en version coudée, pourvu d'un deuxième module de renvoi d'angle 27 pour créer à partir d'une même source de lumière, deux faisceaux laser qui se croisent au-delà de la surface de travail pour former à la surface de travail deux zones d'impact adjacentes P2, P3 ou P6. Ce module optique de base 20, 20' est assemblé à une tête de soudage double 40'. Les zones d'impact peuvent avoir des formes différentes en fonction du type d'optique diffractive 26 utilisée, et notamment deux ronds pour la zone d'impact P2, trois ronds dont deux superposés pour la zone d'impact P3, un carré et un rond pour la zone d'impact P6. Le dispositif à laser 16 peut être complété par un trainard droit 44 ou un trainard circulaire 45, assemblé à la buse latérale 43, pour protéger le cordon de soudure réalisé.

En référence aux figures 11 et 12, le dispositif à laser 10-16 selon l'invention comporte un châssis fixe, non représenté, destiné à être monté sur un support fixe ou mobile d'une machine, d'un robot ou similaire, pour pouvoir être déplacé par rapport aux pièces à usiner et/ou à assembler sur une trajectoire qui se situe dans un espace tridimensionnel défini par un repère orthonormé (X, Y, Z). Cette trajectoire est notamment définie par un plan de joint entre deux pièces à assembler par soudage ou par un plan de coupe programmé.

Il comporte en outre des moyens d'ajustement de la position de la zone d'impact P1 à P6 du ou des faisceaux laser par rapport à cette trajectoire, indépendants de ladite machine ou dudit robot. Ces moyens d'ajustement comportent un premier chariot 4, sur lequel sont montés lesdits modules optiques 20 ou 20' et 30, 40 ou 40' assemblés, ce premier chariot étant mobile en translation et/ou en rotation par rapport audit châssis selon un axe Y pour déplacer la zone d'impact dans cet axe Y. Ils comportent également un deuxième chariot 5, porté par le premier chariot 4, ce deuxième chariot 5 étant mobile en translation et/ou en rotation par rapport au premier chariot 4 selon un axe Z pour déplacer la zone d'impact dans cet axe Z. Une configuration inverse, à savoir le premier chariot porté par le deuxième chariot est également envisageable, de même que tout autre moyen d'ajustement équivalent. Ces chariots 4, 5 sont couplés respectivement à un premier actionneur 4' et à un deuxième actionneur 5' commandés individuellement par des moyens de commande 6 dans le but de corriger la position de la zone d'impact par rapport à la trajectoire en déplaçant cette zone d'impact P1 à P6 selon au moins les axes Y et Z dudit repère orthonormé. Ces actionneurs 4', 5'peuvent être des moteurs linéaires, des moteurs angulaires, des moteurs électromagnétiques, des vérins, ou similaires.

Les moyens de commande 6 sont avantageusement embarqués sur le châssis du dispositif à laser et sont agencés pour communiquer directement et en vrai temps réel avec les actionneurs 4', 5' sans interface, en fonction de données mesurées par des moyens de contrôle 2 et 7 de la position de ladite zone d'impact P1 à P6. Ces moyens de contrôle comportent notamment une première caméra 2 avantageusement embarquée sur le module optique de base 10 et agencée pour visualiser le bain de soudure à travers les optiques grâce à la lame séparatrice 25. La caméra 2 est par exemple une caméra haute vitesse et/ou fonctionnant dans le spectre des rayons infrarouges. Ces moyens de contrôle peuvent être complétés par une deuxième caméra 7 avantageusement embarquée sur les modules optiques dédiés 30, 40, 40' et déportée par rapport au faisceau laser pour assurer le suivi de joint linéaire en corrigeant la position de la zone d'impact par rapport au plan de joint. Une troisième caméra 8 peut être ajoutée pour faire du contrôle de profilométrie, à savoir visualiser le profil du cordon de soudure et alerter en cas de détection d'un défaut, tel qu'un trou, une microfissure, un caniveau, en déclenchant une alarme. Cette troisième caméra 8 est avantageusement embarquée sur les modules optiques dédiés 30, 40, 40' et peut être couplée à des capteurs à courants de Foucault ou similaires.

La figure 11 illustre un exemple d'un dispositif à laser 10 équipé pour faire simultanément du suivi de joint, de la profilométrie et du contrôle de bain de soudure par déplacement linéaire selon les axes Y et Z de la zone d'impact du faisceau laser grâce aux actionneurs 4', 5' agissant sur les chariots 4, 5 mobiles. Dans l'exemple de la figure 12, le dispositif à laser 10 n'est pas équipé des chariots 4, 5 mobiles mais comporte une tête de soudage 40 pourvue d'une optique de focalisation 41 mobile, embarquée sur un support 41' assujetti à un actionneur (cf. fig. 7) pour assurer un suivi de joint qui peut être plus rapide que dans le cas de la figure 11. Bien entendu, les deux technologies peuvent être combinées, à savoir un dispositif à laser 10 équipé à la fois des chariots 4 et 5 mobiles et de l'optique de focalisation 41 mobile.

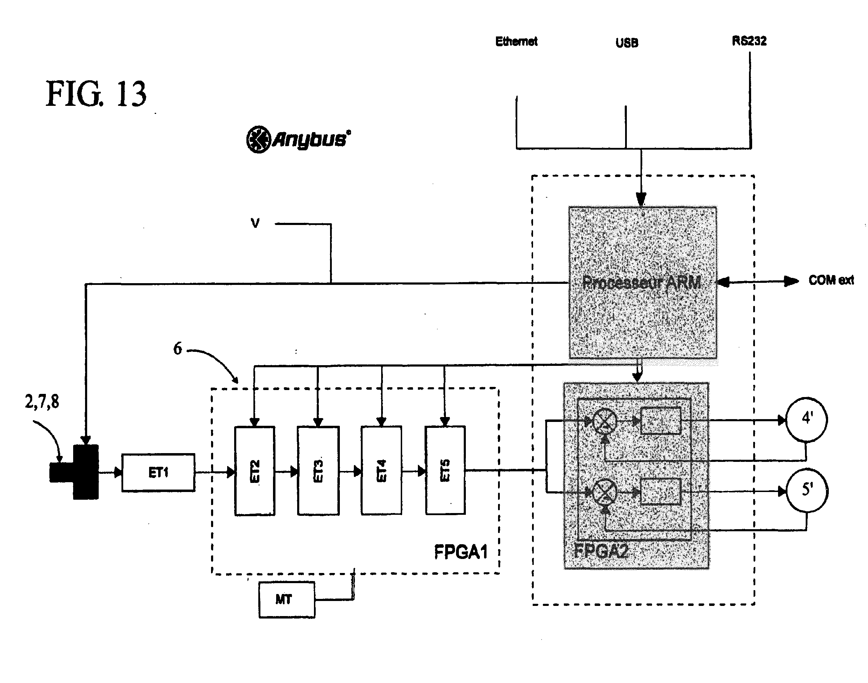

Les moyens de commande 6 sont constitués d'au moins une carte électronique embarquée représentée schématiquement à la figure 13 et comportant au moins un processeur ayant par exemple une architecture de type ARM, fonctionnant notamment sur un système d'exploitation de type LINUX®, et supervisant au moins deux circuits logiques programmables de type FPGA (Field-Programmable Gate Array), dénommés FPGA1 et FPGA2. Dans l'exemple illustré, un des circuits logiques FPGA2 est dédié à la commande des actionneurs 4' et 5', et l'autre circuit logique FPGA1 est dédié au traitement des images vues par les caméras 2, 7 et/ou 8. Bien entendu, ces circuits logiques FPGA1 et FPGA2 peuvent être programmés pour effectuer tout autre contrôle, tel qu'une régulation de la température du bain de fusion et/ou de la puissance du faisceau laser, pour commander tout autre organe du dispositif à laser tel que la source de lumière, etc. La combinaison de ces différents composants permet d'atteindre une capacité de calcul très importante donc une vitesse d'analyse des données très élevée et une réponse en vrai temps réel. Le processeur ARM assure également la communication avec l'extérieur aussi bien pour entrer que pour délivrer des informations, par liaison filaire au moyen de prises de type Ethernet, USB (Universal Serial Bus), RS232 ou similaire, par liaison sans fil, par carte mémoire externe, par tout type d'interface ou de passerelle par exemple de type ANYBUS®.

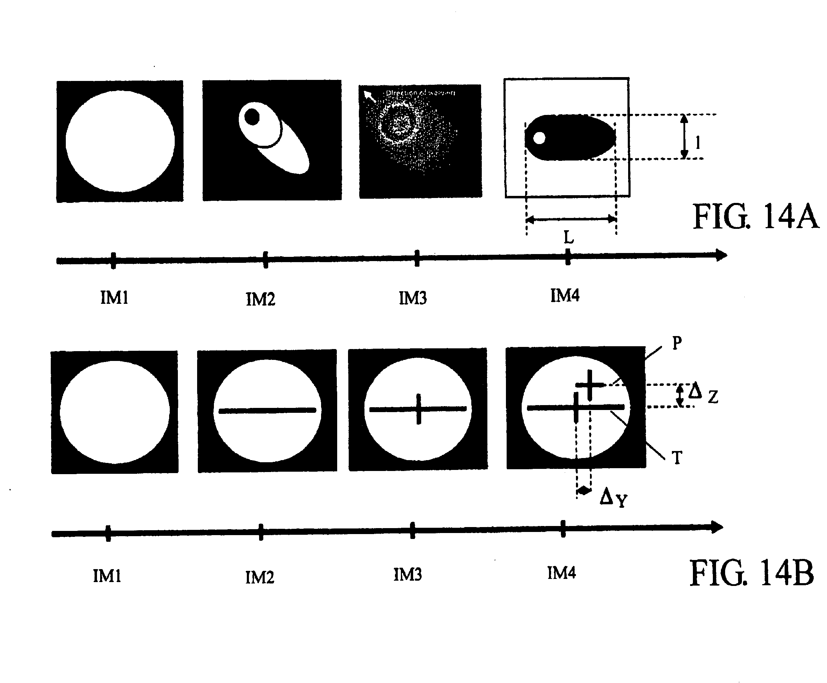

Le circuit logique FPGA1 dédié au traitement des images vues par les caméras 2, 7 et/ou 8 comporte une mémoire interne MI dans laquelle sont stockées notamment les images de référence, et plusieurs étages de traitement ET1 à ET5 permettant d'extraire d'une image brute IM1 une image exploitable IM4, dont les différentes étapes sont illustrées aux figures 14A et 14B. Les images IM1 à IM4 illustrées à la figure 14A correspondent aux fonctions : contrôle de bain et/ou profilométrie, qui génèrent un traitement des informations, telles que largeur et longueur du bain, profil du cordon de soudure, dans un but de traçabilité du produit, alors que les images IM1 à IM4 illustrées à la figure 14B correspondent à la fonction : suivi de joint, qui génèrent un déplacement de la zone d'impact du faisceau laser selon les axes Y et Z, dans le but de corriger en temps réel les défauts de trajectoire. Les caméras 2, 7 et/ou 8 utilisées peuvent être des caméras de type CMOS, haute fréquence, infrarouge, à haut niveau de gris, ou similaire.

Le circuit logique FPGA1 dédié au traitement des images peut avoir une capacité de traitement pouvant atteindre par exemple au moins 1000 images par seconde. Il comporte notamment une étape ET1 de reconstitution par filtrage optique utilisant un filtre interférométrique et/ou un filtre de longueur d'ondes ou similaires de l'image brute IM1 issue de la caméra 2, 7 et/ou 8, suivie d'une étape ET2 de pré-filtrage informatique de type filtre RGB ou similaire pour l'amélioration de la qualité donnant une image IM2 à partir de l'image brute IM1. L'étape suivante ET3 est une étape de filtrage informatique, qui applique à l'image IM2 un filtre informatique de type convolution ou similaire, donnant une image IM3. L'étape suivante ET4 applique à l'image IM3 un algorithme mathématique pour calculer les coordonnées du contour du bain de soudure, comme par exemple sa largeur 1 et sa longueur L dans la figure 14A, ou l'écart ΔY et/ou ΔZ éventuel selon les axes Y et/ou Z entre le plan de joint ou la trajectoire T de référence et la zone d'impact P réelle du faisceau laser dans la figure 14B. Dans la figure 14A, l'étape suivante ET5 envoie des données au circuit logique FPGA2 pour les traiter. Dans la figure 14B, si un écart ΔY et/ou Δ Z est détecté, l'étape suivante ET5 envoie des ordres de mouvement au circuit logique FPGA2 pour commander les actionneurs 4', 5' et/ou l'actionneur 41' de l'optique de focalisation 41 mobile. Les images issues de chacune des trois caméras 2, 7 et 8 sont par conséquent traitées de la même manière, par un même circuit logique FPGA1, contenu sur des cartes électroniques multi-niveaux, embarquées sur le dispositif à laser 10.

Les moyens de commande 6 peuvent être programmés et/ou contrôlés par une ou plusieurs centrale(s) de contrôle ou superviseur(s) 9 distant(s) ou non, permettant également une traçabilité des opérations d'usinage et/ou d'assemblage effectuées par un ou plusieurs dispositifs à laser 10 communiquant ou non au travers d'un serveur 9' comme illustré à la figure 15. Un système de télémaintenance peut être greffé sur les moyens de commande 6 et 1 ou les superviseur(s) 9 pour assurer une maintenance préventive ou tout type de maintenance de l'appareillage embarqué.

### Possibilités d'application industrielle :

Tous les éléments constitutifs du dispositif à laser selon l'invention sont réalisables et reproductibles selon des procédés de fabrication connus. L'assemblage modulaire du dispositif à laser permet le changement de mode d'utilisation et le changement de morphologie du ou des faisceaux de lumière en fonction de l'application souhaitée. De plus, l'utilisation d'optiques diffractives et/ou de sources de lumière de formes différentes permet de changer la forme du faisceau laser en sa zone d'impact. Enfin, l'utilisation de moyens de contrôle compacts et embarqués, associée aux actionneurs intégrés au dispositif à laser, permet un contrôle et une correction du bain de soudure, du suivi de joint et/ou de la profilométrie, très performants, en vrai temps réel et sans inertie, ces moyens étant facilement programmables et adaptables à de multiples applications.

Il ressort clairement de cette description que l'invention permet d'atteindre les buts fixés. La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Dispositif universel à laser (10-16) pour l'usinage et/ou l'assemblage de pièces, comportant au moins un connecteur (21) à une source de lumière, une optique de collimation (22) pour créer à partir de ladite source de lumière (F) un faisceau laser parallèle (FP), une optique de focalisation (31, 41) pour concentrer ce faisceau laser (FC) en au moins une zone d'impact (P1-P6) sur une surface de travail et un embout de travail (32, 42) agencé pour guider ledit faisceau laser et délimiter ladite zone d'impact, **caractérisé en ce que** ledit dispositif est conçu de manière modulaire et comporte un module optique de base (20, 20') et différents modules optiques dédiés (30, 40, 40') interchangeables, adaptés pour différentes applications et assemblés de manière amovible audit module optique de base par des moyens de fixation rapide complémentaires (50), ledit module optique de base (20, 20') comportant au moins ledit connecteur (21) et ladite optique de collimation (22), chaque module optique dédié (30, 40, 40') comportant au moins une optique de focalisation (31, 41) et un embout de travail (32, 42), et **en ce que** ledit module optique de base (20, 20') et lesdits modules optiques dédiés (30, 40, 40') comportent des moyens d'obturation (60) agencés pour coopérer avec lesdits moyens de fixation rapide complémentaires (50) de manière à être déplacés automatiquement entre une position fermée et une position ouverte, et inversement, respectivement lorsque lesdits modules optiques sont assemblés et désassemblés afin de les protéger lorsqu'ils ne sont pas assemblés.

2. Dispositif selon la revendication 1, **caractérisé en ce que** lesdits moyens de fixation complémentaires (50) comportent un système de fixation du type à baïonnette permettant d'assembler lesdits modules optiques par un mouvement relatif poussé-tourné d'un module par rapport à l'autre module.

3. Dispositif selon la revendication 2, **caractérisé en ce que** lesdits modules optiques comportent des moyens de verrouillage (70, 71) agencés pour empêcher le démontage desdits modules optiques assemblés, et des moyens de déverrouillage (72) agencés pour libérer lesdits moyens de verrouillage et autoriser le démontage desdits modules optiques.

4. Dispositif selon la revendication 1, **caractérisé en ce que** lesdits moyens d'obturation (60) comportent un volet d'obturation (61) en forme de diaphragme circulaire monté dans un anneau de support (62) et commandé par un ergot (63) et **en ce que** lesdits ergots de commande (63) des volets d'obturation (61) correspondants auxdits modules optiques assemblés sont couplés entre eux.

5. Dispositif selon la revendication 4, **caractérisé en ce que** lesdits modules optiques comportent respectivement une ouverture agencée pour recevoir lesdits ergots de commande (63) des volets d'obturation (61) et s'étendant sur un secteur angulaire correspondant au moins à la course desdits ergots de commande entre les positions fermée et ouverte desdits volets d'obturation.

6. Dispositif selon l'une quelconque des revendications précédentes, **caractérisé en ce que** ladite optique de collimation (22) dudit module optique de base (20, 20') est montée sur un support mobile axialement agencé pour modifier la distance entre ledit connecteur (21) et ladite optique de collimation (22) pour augmenter ou réduire le diamètre et densité d'énergie dudit faisceau laser (FP).

7. Dispositif selon l'une quelconque des revendications précédentes, **caractérisé en ce que** ledit module optique de base (20') comporte un premier module de renvoi d'angle (23) pourvu au moins d'un miroir (24) incliné disposé en aval de ladite optique de collimation (22) agencé pour dévier ledit faisceau laser (FP).

8. Dispositif selon la revendication 7, **caractérisé en ce que** ledit module optique de base (20) comporte un second module de renvoi d'angle (27) pourvu au moins d'un miroir (28) incliné et d'une optique de focalisation (29), ce module étant agencé pour créer un deuxième faisceau laser (FP) à partir d'une même source de lumière (F).

9. Dispositif selon l'une quelconque des revendications précédentes, **caractérisé en ce qu'**il comporte un second module optique de base (20, 20') fixé au premier module optique de base (20, 20') et comportant au moins un connecteur (21) à une source de lumière et une optique de collimation (22), ce module étant agencé pour créer un deuxième faisceau laser (FP) à partir d'une deuxième source de lumière (F).

10. Dispositif selon l'une quelconque des revendications précédentes, **caractérisé en ce que** ledit module optique de base (20, 20') comporte au moins une optique diffractive (26) disposée en aval de ladite optique de collimation (22) et agencée pour créer à partir d'au moins un faisceau laser une ou plusieurs zones d'impact (P1-P6).

11. Dispositif selon la revendication 10, **caractérisé en ce qu'**il comporte plusieurs optiques diffractives (26) agencées pour créer des zones d'impact de formes différentes.

12. Dispositif selon l'une quelconque des revendications précédentes, **caractérisé en ce qu'**il comporte un module de focalisation mobile (41') pourvu au moins d'une optique de focalisation (41) couplée à un actionneur agencé pour déplacer latéralement ladite optique de focalisation (41) par rapport à l'axe dudit faisceau laser et déplacer son point d'impact.

13. Dispositif selon l'une quelconque des revendications précédentes, **caractérisé en ce qu'**il comporte au moins un premier chariot mobile (4) portant lesdits modules optiques et couplé à un actionneur (4') pour déplacer ladite zone d'impact selon au moins un premier axe (Y).

14. Dispositif selon la revendication 13, **caractérisé en ce qu'**il comporte un second chariot mobile (5) porté par le premier chariot mobile (4) et couplé à un second actionneur (5') pour déplacer ledit point d'impact selon au moins un second axe (Z) perpendiculaire au premier axe (Y).

15. Dispositif selon l'une quelconque des revendications précédentes, **caractérisé en ce qu'**il comporte au moins une liaison pivot entre au moins ledit connecteur (21) et ladite optique de collimation (22) agencée pour former un dispositif à laser orbital.

16. Dispositif selon l'une quelconque des revendications précédentes, **caractérisé en ce qu'**il comporte au moins un premier moteur (80) agencé pour déplacer angulairement ledit dispositif ou ledit module optique dédié pour créer un mouvement pendulaire.

17. Dispositif selon l'une quelconque des revendications précédentes, **caractérisé en ce qu'**il comporte au moins un second moteur (81) agencé pour déplacer axialement ledit dispositif ou un système additionnel de type MIG/MAG (46) pour créer un mouvement linéaire.

18. Dispositif selon l'une quelconque des revendications 13 et 14, **caractérisé en ce qu'**il comporte des moyens de contrôle (2, 7) agencés pour contrôler la position et la qualité de ladite zone d'impact dudit faisceau laser par rapport à une trajectoire définie sur la surface de travail et des moyens de commande (6) agencés pour commander lesdits actionneurs (4', 5') pour corriger en temps réel la position de ladite zone d'impact par rapport à ladite trajectoire, lesdits moyens de contrôle et de commande étant embarqués sur ledit dispositif.

19. Dispositif selon la revendication 18, **caractérisé en ce que** lesdits moyens de contrôle comportent au moins une caméra (2) embarquée sur ledit dispositif et **en ce que** lesdits moyens de commande comportent au moins un processeur qui supervise au moins deux circuits logiques dont un est dédié au traitement des images vues par ladite caméra (2) et l'autre est dédié à la commande des actionneurs (4', 5') desdits chariots (4, 5).

20. Dispositif selon la revendication 19, **caractérisé en ce que** ledit processeur est agencé pour fonctionner sur un système d'exploitation de type LINUX®, et lesdits circuits logiques sont programmables et sont de type FPGA.

21. Dispositif selon l'une quelconque des revendications 18 à 20, **caractérisé en ce que** lesdits moyens de commande (6) comportent des moyens de communication avec au moins une centrale de contrôle ou un superviseur (9).

## Patentansprüche

1. Universelle Laservorrichtung (10-16) für die Bearbeitung und/oder Verarbeitung und/oder Zusammensetzung von Werkstücken, mit zumindest einem Verbindungsstück (21) an eine Lichtquelle, einer Kollimationsoptic (22) um aus besagter Lichtquelle (F) einen parallelen Laserstrahl (FP) zu bilden, einer Fokussieroptik (31, 41) um diesen Laserstrahl (FC) auf zumindest eine Auftreffzone (P1-P6) in einem Arbeitsbereich zu konzentrieren und einem Arbeits-Endstück (32, 42), das ausgelegt ist, um besagten Laserstrahl zu führen und besagte Auftreffzone zu begrenzen, **dadurch gekennzeichnet, dass** besagte Vorrichtung modular konstruiert ist und ein optisches Grundmodul (20, 20') beträgt, sowie verschiedene auswechselbare dedizierte optische Module (30, 40, 40'), die für verschiedene Applikationen angepasst und abnehmbar mittels komplementärer Schnellbefestigungs-Mitteln (50) an besagtem optischen Grundmodul befestigt werden, wobei besagtes optisches Grundmodul (20, 20') zumindest besagtes Verbindungsstück (21) und besagte Kollimationsoptic (22) beträgt, wobei jedes dedizierte optische Modul (30, 40, 40') zumindest eine Fokussieroptik (31, 41) und ein Arbeits-Endstück (32, 42) beträgt, und dadurch, dass besagtes optisches Grundmodul (20, 20') und besagte dedizierte optische Module (30, 40, 40') Verschlussmittel (60) betragen, die ausgelegt sind; um mit besagten komplementären Schnellbefestigungs-Mitteln (50) zusammenzuarbeiten, um automatisch zwischen einer geschlossenen Stellung und einer geöffneten Stellung und umgekehrt verstellt zu werden wenn besagte optischen Module angebaut bzw. ausgebaut werden, um sie zu schützen wenn sie nicht angebaut sind.

2. Vorrichtung nach Anspruch 1, **dadurch gekennzeichnet, dass** besagte komplementäre Befestigungs-Mittel (50) ein Befestigungs-System des Typs Bajonett betragen, das erlaubt, besagte optische Module durch eine relative Druck-und-Drehbewegung eines Moduls in Bezug auf das andere Modul anzubauen.

3. Vorrichtung nach Anspruch 2, **dadurch gekennzeichnet, dass** besagte optische Module Verriegelungs-Mittel (70, 71) betragen, die ausgelegt sind, um den Ausbau der zusammengebauten besagten optischen Module zu verhindern, sowie Entriegelungsmittel (72), die ausgelegt sind, um besagte Verriegelungs-Mittel zu lösen und den Ausbau der besagten optischen Module zu ermöglichen.

4. Vorrichtung nach Anspruch 1, **dadurch gekennzeichnet, dass** besagte Verschlussmittel (60) einen Verschluss (61) in der Form einer in einen Tragring (62) montierten und durch einen Hebel (63) betätigten kreisförmigen Blende (61) aufweisen, und dadurch, dass die besagten Betätigungshebel (63) der den besagten zusammengebauten Modulen entsprechenden Verschlüsse (61) untereinander gekoppelt sind.

5. Vorrichtung nach Anspruch 4, **dadurch gekennzeichnet, dass** besagte optische Module jeweils eine Öffnung betragen, die ausgelegt ist, um besagte Betätigungshebel (63) der Verschlüsse (61) aufzunehmen und sich auf einem Winkelsektor erstrecken, der zumindest dem Verfahrweg der besagten Betätigungshebel zwischen der geschlossenen und der geöffneten Stellung der besagten Verschlüsse entspricht.

6. Vorrichtung nach einem beliebigen der vorhergehenden Ansprüche, **dadurch gekennzeichnet, dass** besagte Kollimationsoptik (22) des besagten optischen Grundmoduls (20, 20') auf einen axial verfahrbaren Träger montiert ist, der ausgelegt ist, um den Abstand zwischen besagtem Verbindungsstück (21) und besagter Kollimationsoptik (22) zu verstellen, um den Durchmesser und die Energiedichte des besagten Laserstrahls (FP) zu erhöhen oder zu reduzieren.

7. Vorrichtung nach einem beliebigen der vorhergehenden Ansprüche, **dadurch gekennzeichnet, dass** besagtes optische Grundmodul (20') ein erstes, nach besagter Kollimationsoptik (22) angeordnetes Umlenkmodul (23) mit zumindest einem geneigten Spiegel (24) beträgt, um besagten Laserstrahl (FP) abzulenken.

8. Vorrichtung nach Anspruch 7, **dadurch gekennzeichnet, dass** besagtes optische Grundmodul (20) ein zweites Umlenkmodul (27) mit zumindest einem geneigten Spiegel (28) und einer Fokussieroptik (29) beträgt, wobei dieses Modul ausgelegt ist, um mit einer selben Lichtquelle (F) einen zweiten Laserstrahl (FP) zu bilden.

9. Vorrichtung nach einem beliebigen der vorhergehenden Ansprüche, **dadurch gekennzeichnet, dass** sie ein zweites, an dem ersten optischen Grundmodul (20, 20') befestigtes optisches Grundmodul (20, 20') beträgt, das zumindest ein Verbindungsstück (21) an eine Lichtquelle und eine Kollimationsoptik (22) beträgt, wobei dieses Modul ausgelegt ist, um aus einer zweiten Lichtquelle (F) einen zweiten Laserstrahl (FP) zu bilden.

10. Vorrichtung nach einem beliebigen der vorhergehenden Ansprüche, **dadurch gekennzeichnet, dass** besagtes optische Grundmodul (20, 20') zumindest eine nach besagter Kollimationsoptik (22) angeordnete diffraktive Optik (26) beträgt, die ausgelegt ist, um mit zumindest einem Laserstrahl eine oder mehrere Auftreffzonen (P1-P6) zu bilden.

11. Vorrichtung nach Anspruch 10, **dadurch gekennzeichnet, dass** sie mehrere diffraktive Optiken (26) beträgt, die ausgelegt sind, um Auftreffzonen mit unterschiedlichen Formen zu bilden.

12. Vorrichtung nach einem beliebigen der vorhergehenden Ansprüche, **dadurch gekennzeichnet, dass** sie ein mobiles Fokussiermodul (41') beträgt, das mindestens eine mit einem Antrieb gekoppelte Fokussieroptik (41) aufweist, wobei der Antrieb ausgelegt ist, um besagte Fokussieroptik (41) seitlich in Bezug auf die Achse des besagten Laserstrahls zu verstellen und somit seinen Auftreffpunkt zu verstellen.

13. Vorrichtung nach einem beliebigen der vorhergehenden Ansprüche, **dadurch gekennzeichnet, dass** sie zumindest einen ersten mobilen Schlitten (4) beträgt, der besagte optische Module trägt und an einen Antrieb (4') gekoppelt ist, um besagte Auftreffzone in zumindest einer ersten Achse (Y) zu verstellen.

14. Vorrichtung nach Anspruch 13, **dadurch gekennzeichnet, dass** sie einen zweiten, vom ersten mobilen Schlitten (4) getragenen und an einen zweiten Antrieb (5') gekoppelten mobilen Schlitten (5) beträgt, um besagten Auftreffpunkt in zumindest einer zweiten, zur ersten Achse (Y) senkrechten Achse (Z) zu verstellen.

15. Vorrichtung nach einem beliebigen der vorhergehenden Ansprüche, **dadurch gekennzeichnet, dass** sie zumindest eine Drehzapfen-Verbindung zwischen zumindest besagtem Verbindungsstück (21) und besagter Kollimationsoptik (22) beträgt, die ausgelegt ist, um eine Orbital-Laser-Vorrichtung zu bilden.

16. Vorrichtung nach einem beliebigen der vorhergehenden Ansprüche, **dadurch gekennzeichnet, dass** sie zumindest einen ersten Motor (80) beträgt, der ausgelegt ist, um besagte Vorrichtung oder besagtes dediziertes optisches Modul in Winkelrichtung zu bewegen, um eine Pendelbewegung zu erzeugen.

17. Vorrichtung nach einem beliebigen der vorhergehenden Ansprüche, **dadurch gekennzeichnet, dass** sie zumindest einen zweiten Motor (81) beträgt, der ausgelegt ist, um besagte Vorrichtung oder ein zusätzliches System des Typs MIG/MAG (46) axial zu bewegen, um eine Linearbewegung zu erzeugen.

18. Vorrichtung nach einem beliebigen der Ansprüche 13 und 14, **dadurch gekennzeichnet, dass** sie Kontrollmittel (2, 7) beträgt, die ausgelegt sind, um die Position und die Qualität der besagten Auftreffzone des besagten Laserstrahls in Bezug auf eine auf der Arbeitsfläche festgelegte Bahn zu kontrollieren, sowie Steuermittel (6), die ausgelegt sind, um besagte Antriebe (4', 5') anzusteuern, um die Position der besagten Auftreffzone in Bezug auf besagte Bahn in Echtzeit zu korrigieren, wobei besagte Kontroll- und Steuermittel in besagter Vorrichtung integriert sind.

19. Vorrichtung nach Anspruch 18, **dadurch gekennzeichnet, dass** besagte Kontrollmittel zumindest eine auf besagter Vorrichtung angebrachte Kamera (2) betragen und dadurch, dass besagte Steuermittel zumindest einen Prozessor betragen, der zumindest zwei Logikschaltungen überwacht, wovon eine die von besagter Kamera (2) aufgenommenen Bilder bearbeitet und die andere die Steuerung der Antriebe (4', 5') der besagten Schlitten (4, 5) übernimmt.

20. Vorrichtung nach Anspruch 19, **dadurch gekennzeichnet, dass** besagter Prozessor ausgelegt ist, um mit einem Betriebssystem des Typs LINUX® zu funktionieren und besagte Logikschaltungen programmierbar und des Type FPGA sind.

21. Vorrichtung nach einem beliebigen der Ansprüche 18 bis 20, **dadurch gekennzeichnet, dass** besagte Steuermittel (6) Kommunikationsmittel mit zumindest einer Steuerzentrale oder einem Supervisor (9) betragen.

## Claims

1. Universal laser device (10-16) for machining and/or assembling parts, comprising at least one connector (21) to a light source, one collimation optics (22) to create from said light source (F) a parallel laser beam (FP), one focusing optics (31, 41) to concentrate this laser beam (FC) in at least one impact zone (P1-P6) on a work surface and one work nozzle (32, 42) arranged to guide said laser beam and delimit said impact zone, **characterized in that** said device is designed in a modular way and comprises a basic optical module (20, 20') and various interchangeable dedicated optical modules (30, 40, 40') adapted for different applications and detachably assembled to said basic optical module by complementary quick-fastening means (50), said basic optical module (20, 20') comprising at least said connector (21) and said collimation optics (22), each dedicated optical module (30, 40, 40') comprising at least one focusing optics (31, 41) and one work nozzle (32, 42), and **in that** said basic optical module (20, 20') and said dedicated optical modules (30, 40, 40') comprise closure means (60) arranged to cooperate with said complementary quick-fastening means (50) in order to be moved automatically between a closed position and an open position and vice-versa, respectively when said optical modules are attached and detached, to protect them when they are not attached.

2. Device according to claim 1, **characterized in that** said complementary fastening means (50) comprise a bayonet-type fastening system that allows assembling said optical modules by means of a relative push-and-tum movement of one module with respect to the other module.

3. Device according to claim 2, **characterized in that** said optical modules comprise locking means (70, 71) arranged to prevent detaching of said optical modules when they are assembled, and unlocking means (72) arranged to release said locking means and allow detaching of said optical modules.

4. Device according to claim 1, **characterized in that** said closure means (60) comprise a shutter (61) having the shape of a circular diaphragm mounted in a supporting ring (62) and controlled by a lever (63), and **in that** said control levers (63) of the shutters (61) belonging to said assembled optical modules are coupled with each other.

5. Device according to claim 4, **characterized in that** said optical modules comprise respectively an opening arranged for receiving said control levers (63) of shutters (61) and extending on an angular sector covering at least the stroke of said control levers between the closed and open positions of said shutters.

6. Device according to any of the previous claims, **characterized in that** said collimation optics (22) of said basic optical module (20, 20') is mounted on an axially movable support arranged to modify the distance between said connector (21) and said collimation optics (22) to increase or reduce the diameter and energy density of said laser beam (FP).

7. Device according to any of the previous claims, **characterized in that** said basic optical module (20') comprises a first angular deflection module (23) provided with at least one inclined mirror (24) located downstream of said collimation optics (22) and arranged to deviate said laser beam (FP).

8. Device according to claim 7, **characterized in that** said basic optical module (20) comprises a second angular deflection module (27) provided with at least one inclined mirror (28) and with a focusing optics (29), this module being arranged to create a second laser beam (FP) from a same light source (F).

9. Device according to any of the previous claims, **characterized in that** it comprises a second basic optical module (20, 20') fixed on the first basic optical module (20, 20') and comprising at least one connector (21) to a light source and a collimation optics (22), this module being arranged to create a second laser beam (FP) from a second light source (F).

10. Device according to any of the previous claims, **characterized in that** said basic optical module (20, 20') comprises at least one diffractive optics (26) located downstream of said collimation optics (22) and arranged to create one or several impact zones (P1-P6) from at least one laser beam.

11. Device according to claim 10, **characterized in that** it comprises several diffractive optics (26) arranged to create impact zones having different shapes.

12. Device according to any of the previous claims, **characterized in that** it comprises a movable focusing module (41') provided with at least one focusing optics (41) coupled with an actuator arranged to move said focusing optics (41) laterally with respect to the axis of said laser beam and shift its impact point.

13. Device according to any of the previous claims, **characterized in that** it comprises at least a first mobile carriage (4) carrying said optical modules and coupled with an actuator (4') to shift said impact zone according to at least a first axis (Y).

14. Device according to claim 13, **characterized in that** it comprises a second mobile carriage (5) carried by the first mobile carriage (4) and coupled with a second actuator (5') to shift said impact zone according to at least a second axis (Z) perpendicular to the first axis (Y).

15. Device according to any of the previous claims, **characterized in that** it comprises at least one pivoting link between at least said connector (21) and said collimation optics (22), arranged to form an orbital laser device.

16. Device according to any of the previous claims, **characterized in that** it comprises at least a first motor (80) arranged to move angularly said device or said dedicated optical module to create a pendulum movement.

17. Device according to any of the previous claims, **characterized in that** it comprises at least a second motor (81) arranged to move axially said device or an additional system of the MIG/MAG type (46) to create a linear movement.

18. Device according to any of claims 13 and 14, **characterized in that** it comprises monitoring means (2, 7) arranged to monitor the position and quality of said impact zone of said laser beam with respect to a path defined on the work surface and control means (6) arranged to control said actuators (4', 5') in order to correct in real time the position of said impact zone with respect to said path, said monitoring and control means being on board of said device.

19. Device according to claim 18, **characterized in that** said monitoring means include at least one camera (2) installed on board of said device and **in that** said control means comprise at least one processor supervising at least two logic circuits, one of which being dedicated to the processing of the images provided by said camera (2) and the other being dedicated to the control of the actuators (4', 5') of said carriages (4, 5).

20. Device according to claim 19, **characterized in that** said processor is arranged to operate under a LINUX®-type operating system and said logic circuits are programmable and of the FPGA type.

21. Device according to any of claims 18 to 20, **characterized in that** said control means (6) comprise means for the communication with at least one central control unit or supervisor (9).
